# EUROPÄISCHE PATENTANMELDUNG

(11) **EP 1 283 419 A2**
(43) Veröffentlichungstag der Anmeldung: **12.02.2003**
(21) Anmeldenummer: 02013133.0
(22) Anmeldetag: 14.06.2002
(51) Int. Cl.: G01N 31/12

(54) **Vorrichtung zur Bestimmung einer Partikelkonzentration eines Abgasstroms**

(30) Priorität: 11.08.2001 DE 10139615
(71) Anmelder: ROBERT BOSCH GMBH, 70442 Stuttgart (DE)
(72) Erfinder: Breuer, Norbert, Dr., 71254 Ditzingen (DE)

(57) **Zusammenfassung**

Es wird eine Vorrichtung zur Bestimmung einer Partikelkonzentration eines Abgasstroms (2) einer Verbrennungseinrichtung (1), insbesondere einer Diesel-Verbrennungseinrichtung, vorgeschlagen, die bei hoher Zeitauflösung ein Bestimmen sehr geringer Partikelkonzentrationen im Abgas (2) von Verbrennungseinrichtungen (1) ermöglicht. Dies wird erfindungsgemäß dadurch erreicht, dass wenigstens eine Messeinheit zum Messen einer Konzentration eines Oxidationsmittels im Abgasstrom (2) mit wenigstens einem Oxidationsmittel sensitiven Messelement (7) vorgesehen ist.

## Beschreibung

Die Erfindung betrifft eine Vorrichtung zur Bestimmung einer Partikelkonzentration eines Abgasstroms einer Verbrennungseinrichtung nach dem Oberbegriff des Anspruchs 1.

### Stand der Technik

Sinkende Emissionsgrenzwerte für Verbrennungskraftmaschinen, insbesondere von Dieselmotoren, vor allem für den Verkehrsbereich machen neben aktiven Emissionsminderungsverfahren auch Verfahren zum Messen geringer Partikelkonzentrationen im Abgasstrom notwendig.

Partikel aus Dieselmotoren bestehen zu einem wesentlichen Anteil aus Ruß und an diesem absorbierten Kohlenwasserstoffen. Durch Optimierung der Verbrennungsprozesse ist es gelungen, die emittierte Partikelmasse kontinuierlich zu reduzieren. Insbesondere die Anzahl großer Partikel mit Durchmessern über einem Mikrometer, die früher zur dunklen Färbung von Dieselabgaben beitrugen, wurde drastisch verringert.

Aufgrund der geringen Massenkonzentration und des geringen mittleren Durchmessers der Partikel steigen die Anforderungen an Messmethoden zur Bestimmung der durch Gesetze limitierten Partikelmasse. Dies gilt insbesondere für Partikelsensoren, die in Kraftfahrzeugen zur Regelung von Emissionsminderungskomponenten und/oder des Motors eingesetzt werden. Entsprechende Sensoren müssen neben einer genügenden Genauigkeit und Ansprechzeit auch Anforderungen bezüglich mechanischer und thermischer Beanspruchungen erfüllen und zugleich in großer Stückzahl zu geringen Kosten herzustellen sein.

Es sind bereits Sensoren für stationäre Motorprüfstände verfügbar, die beispielsweise auf dem Messen der Schwarzzahl, der Opazität oder der gravimetrischen Vermessung der Änderung des Gewichts eines Filters beruhen. Diese und andere Messmethoden genügen den oben aufgeführten Anforderungen lediglich teilweise.

### Aufgabe und Vorteile der Erfindung

Demgegenüber hat die vorliegende Erfindung die Aufgabe, eine Vorrichtung zur Bestimmung einer Partikelkonzentration eines Abgasstromes einer Verbrennungseinrichtung, insbesondere einer Diesel-Verbrennungseinrichtung, vorzuschlagen, die bei hoher Zeitauflösung ein Bestimmen sehr geringer Partikelkonzentrationen im Abgas von Verbrennungseinrichtungen ermöglicht.

Diese Aufgabe wird, ausgehend von einem Stand der Technik der einleitend genannten Art, durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung dadurch aus, dass wenigstens eine Messeinheit zum Messen einer Konzentration eines Oxidationsmittels im Abgasstrom mit wenigstens einem Oxidationsmittel sensitiven Messelement vorgesehen ist.

Mit Hilfe der erfindungsgemäßen Messeinheit wird durch die Reaktion des Oxidationsmittels mit den Partikeln eine indirekte Messmethode zur Bestimmung der Partikelkonzentration des Abgasstromes realisierbar.

Vorteilhafterweise erfolgt in einem vorgegebenen Reaktionsbereich eine Umsetzung des Oxidationsmittels durch die Partikel, so dass hierdurch in Strömungsrichtung des Abgases längs des Reaktionsbereichs eine Abnahme der Oxidationsmittelkonzentration erfolgt.

Als Oxidationsmittel kommen alle chemischen Elemente bzw. Verbindungen in Frage, die sich bei den im Abgas vorhandenen bzw. erzeugten Reaktionsbedingungen zumindest teilweise oxidativ mit den Partikeln umsetzen, wie beispielsweise atmosphärische Luft, Ozon, Wasserstoffperoxid, Stickstoffdioxid, Salpetersäure oder dergleichen.

In einer ersten, bevorzugten Variante der Erfindung umfasst der aus der Verbrennungseinrichtung ausströmende Abgasstrom bereits das zu messende Oxidationsmittel, wie z.B. Stickstoffdioxid.

In einer zweiten, vorteilhaften Variante der Erfindung ist wenigstens eine Speichereinheit zur Speicherung des Oxidationsmittels vorgesehen. Hierbei kann beispielsweise das Oxidationsmittel, z.B. Wasserstoffperoxid oder dergleichen, getankt und bis zum Zeitpunkt des Verbrauchs in der Speichereinheit zwischengespeichert werden, beispielsweise bei mobilen Anwendungen.

In einer dritten, bevorzugten Variante der Erfindung ist wenigstens eine Oxidationseinheit zur Erzeugung des Oxidationsmittels vorgesehen. Mit Hilfe dieser Maßnahme kann das Oxidationsmittel, z.B. Ozon oder dergleichen, nahezu unmittelbar zur Bestimmung der Partikelkonzentration erzeugt und/oder gegebenenfalls mittels der Speichereinheit gemäß Variante zwei zwischengespeichert werden. Möglicherweise kann hierdurch eine separate Betankung eines entsprechenden Oxidationsmittels oder eines zusätzlichen Betriebsstoffes, der zu dem Oxidationsmittel umgeformt wird, entfallen.

In einer vierten, vorteilhaften Variante der Erfindung umfasst die Oxidationseinheit wenigstens ein Oxidationselement zur Umformung des Abgasstromes und Erzeugung des Oxidationsmittels. Hierdurch wird ermöglicht, dass das Oxidationsmittel direkt im Abgasstrom erzeugt werden kann, beispielsweise Stickstoffdioxid, usw.. Hierfür kann vorzugsweise ein Oxidationskatalysator oder dergleichen verwendet werden, der häufig bereits im Abgasstrang von Verbrennungseinrichtungen vorhanden ist. Mit Hilfe dieser Variante wird vor allem der konstruktive Aufwand einer Vorrichtung gemäß der Erfindung vorteilhaft reduziert.

Vorzugsweise umfasst die Messeinheit wenigstens zwei Oxidationsmittel sensitive, voneinander beabstandete Messelemente. Hierbei definiert der Abstand zwischen den beiden Messelementen den vorgegebenen Reaktionsbereich.

Alternativ oder in Kombination hierzu ist wenigstens ein von dem Messelement beabstandetes Zufuhrelement zur Zuführung des Oxidationsmittels von der Speichereinheit und/oder Oxidationseinheit zum Abgasstrom vorgesehen. Gegebenenfalls definiert hier der Abstand zwischen dem Zufuhrelement und dem möglicherweise einzigen Messelement den Reaktionsbereich.

Wird das Zufuhrelement zusammen mit zwei, voneinander beabstandeten Messelementen verwendet, so definiert im Allgemeinen der Abstand zwischen den Messelementen den Reaktionsbereich.

Grundsätzlich ist bei der Verwendung von einem Oxidationsmittel mit vor der Zuführung in den Abgasstrom bekannter Konzentration die Ausführungsform der Erfindung von Vorteil, bei der der Abstand zwischen dem Zufuhrelement und dem einzigen Messelement den Reaktionsbereich definiert. Dieser Fall ist insbesondere bei einer Speicherung eines Oxidationsmittels bzw. einer Erzeugung des Oxidationsmittels außerhalb des Abgasstromes vorteilhaft realisierbar.

Generell kann zur Definition des vorgegebenen Reaktionsbereichs alternativ der Reaktionsbereich durch zwei, voneinander beabstandete Probeentnahmeelemente oder ein vom Zufuhrelement beabstandetes Probeentnahmeelement realisiert werden, wobei jede Probe des Abgasstromes einem Messelement zugeführt wird. Hierbei wird beispielsweise eine Probe mittels dem in Strömungsrichtung des Abgases ersten Probeentnahmeelementes entnommen und einem Messelement zugeführt. Gegebenenfalls anschließend wird mittels einem in Strömungsrichtung des Abgases dahinter angeordneten, zweiten Probeentnahmeelementes eine Probe des Abgases entnommen und vorzugsweise dem gleichen Messelement zugeführt. Bei dieser Variante der Erfindung sind insbesondere die Probevolumina vergleichsweise klein auszubilden, so dass eine vorteilhafte hohe Zeitauflösung der Vorrichtung gemäß der Erfindung realisierbar ist.

In einer besonderen Weiterbildung der Erfindung ist wenigstens eine Dosiervorrichtung, z.B. ein regelbares Ventil oder dergleichen, zum dosierten Zuführen des Oxidationsmittels zum Abgasstrom vorgesehen. Mit Hilfe dieser Maßnahme kann insbesondere eine vorgegebene Menge des Oxidationsmittels dem Abgasstrom zugeführt werden. Die zu dosierende Menge kann hierbei vor allem von der Reaktionsfähigkeit des Oxidationsmittels und/oder der zu erwartenden Partikelkonzentration abhängen.

Vorzugsweise können verschiedenste Dosierstrategien mit wechselnden Dosiermengen und/oder Dosierzeiten, insbesondere einem alternierenden Ein- und Ausschalten des Oxidationsmittelstromes, gegebenenfalls in der Steuer- bzw. Auswerteeinheit hinterlegt und mittels dieser durchgeführt werden. In vorteilhafter Weise kann hierdurch eine verbesserte Messauflösung sowie eine höhere Messbereichsdynamik der Vorrichtung gemäß der Erfindung realisiert werden.

In einer vorteilhaften Ausführungsform der Erfindung ist eine Änderung der Dosiermenge des Oxidationsmittels in Abhängigkeit von der am Messelement ermittelten Restkonzentration des Oxidationsmittels vorgesehen. Beispielsweise ist hierdurch eine sogenannte automatische Messbereichsumschaltung realisierbar. Gegebenenfalls kann das Oxidationsmittel in vorteilhafter Weise in verschiedenen Messstufen dem Abgasstrom zudosiert werden, z.B. zuerst mit ca. 20 ppm, dann mit ca. 50 ppm, anschließend mit ca. 100 ppm, danach mit ca. 500 ppm, dann mit ca. 1000 ppm, usw.. Hierbei werden die verschiedenen Messstufen im Allgemeinen solange verändert, bis ein vorteilhaftes Messen der Restkonzentration des Oxidationsmittels im Abgasstrom und somit eine Bestimmung relativ geringer Partikelkonzentrationen des Abgasstromes gewährleistet ist.

Vorzugsweise sind unterschiedliche Kennfelder in der Steuer- bzw. Auswerteeinheit hinterlegt, die insbesondere den Zusammenhang zwischen Oxidationsmittelkonzentration und Partikelkonzentration und/oder dem Lastmoment der Verbrennungseinrichtung mit der zu erwartenden Partikelmenge bzw. -konzentration umfassen. Vorteilhafterweise kann beispielsweise eine Vorauswahl der oben erwähnten Messstufen aufgrund des Zusammenhanges zwischen dem mittels eines entsprechenden Sensors ermittelten Lastmomentes der Verbrennungseinrichtung mit der zu erwartenden Partikelmenge erfolgen. Hierdurch ist insbesondere eine vorteilhafte Zeitauflösung der Erfindung realisierbar.

Vorzugsweise ist die dosierte Menge des Oxidationsmittels in Abhängigkeit von den im Reaktionsbereich herrschenden Reaktionsbedingungen, insbesondere von der Temperatur, einstellbar. Vorteilhafterweise wird die Temperatur im Reaktionsbereich mittels eines Temperatursensors ermittelt und insbesondere das Signal an die Steuer- bzw. Auswerteeinheit weitergeleitet. Hierdurch ist es möglich, die am Messelement detektierte Abnahme der Oxidationsmittelkonzentration bzw.
-menge durch eine veränderte, insbesondere höhere Reaktionstemperatur zu berücksichtigen und gegebenenfalls von einer Zunahme bzw. Änderung der Partikelkonzentration im Abgasstrom zu unterscheiden. Demzufolge kann mit dieser Variante der Erfindung ein Ausgleich von Temperatureinflüssen auf die Messung realisiert werden, was zu einer vergleichsweise genauen Bestimmung der Partikelkonzentration des Abgasstroms verwendet werden kann.

Generell erfolgt die Bestimmung der Partikelkonzentration des Abgasstromes über eine Differenzbildung zwischen eindosierter oder gemessenen Oxidationsmittelmenge bzw. -konzentration des Oxidationsmittels an der Stelle des ersten Messelementes bzw. des Zufuhrelementes und der verbleibenden Oxidationsmittelmenge bzw. -konzentration des Oxidationsmittels an der Stelle des zweiten Messelementes bzw. am Ende des Reaktionsbereichs. Die im Abgas vorhandene Partikelmenge korreliert mit diesem Differenzwert.

Vorzugsweise durch Verändern der eingesetzten Oxidationsmittelmenge können vor allem Querempfindlichkeiten bezüglich anderer Oxidationsmittel wie z.B. Sauerstoff oder anderer im Abgas enthaltener Stoffe, die nicht nachgewiesen werden sollen, verringert bzw. ausgeschaltet werden. Hierbei ist insbesondere eine genaue Dosierung der Oxidationsmittelmenge bzw. Bestimmung der Oxidationsmittelkonzentration am in Strömungsrichtung des Abgases vorderen Endes des Reaktionsbereiches vorzusehen.

Vorteilhafterweise kann das Signal des Messelementes am in Strömungsrichtung des Abgases hinteren Ende des Reaktionsbereichs zur Steuerung bzw. Regelung der zu dosierenden Oxidationsmittelmenge verwendet werden, d.h. vor allem zur Umschaltung des Messbereichs bzw. Ändern der Messstufe.

In einer besonderen Weiterbildung der Erfindung ist wenigstens eine Stromteilereinheit zum Teilen des Abgasstromes in mindestens zwei Teilströme vorgesehen. Mit Hilfe dieser Maßnahme wird ermöglicht, dass lediglich einer der Teilströme zur Bestimmung der Partikelkonzentration des Abgasstromes verwendet und vor allem mittels der Steuer- bzw. Auswerteeinheit auf die Menge der Partikel des gesamten Abgasstromes umgerechnet werden kann. Vorzugsweise umfasst die Stromteilervorrichtung hierfür wenigstens das bzw. die Messelemente, Zufuhrelement, Oxidationselement und/oder die Dosiervorrichtung, so dass in oben angeführter Weise die Bestimmung der Partikelkonzentration realisierbar ist.

In bevorzugtere Weise ist wenigstens eine Kühl- und/oder Heizeinheit zum Kühlen bzw. Heizen des Abgasstromes und/oder dessen Teilströme vorgesehen. Hierdurch wird eine vorteilhafte Thermostatisierung des Abgasstromes und/oder dessen Teilströme realisierbar. Diese Maßnahme ermöglicht die oben erwähnte Querempfindlichkeit bezüglich der Temperatur des Abgasstromes und/oder dessen Teilströme zu verringern bzw. vollständig zu beseitigen, wodurch eine vergleichsweise genaue Messung der Partikelmenge des Abgasstromes realisierbar ist.

In einer vorteilhaften Ausführungsform der Erfindung ist wenigstens ein Partikelfilter zur Filtrierung der Partikel des Abgasstromes vorgesehen. Mit Hilfe eines derartigen Partikelfilters kann die Partikelkonzentration über einen gewissen Zeitbereich integriert bzw. aufsummiert werden. In vorteilhafter Weise wird hierfür der häufig bereits vorhandene Partikelfilter entsprechender Verbrennungseinrichtungen für diese Ausführungsform verwendet.

Vorzugsweise ist wenigstens der Partikelfilter in Strömungsrichtung des Abgases vor einem Messelement angeordnet. Durch diese vorteilhafte Anordnung des Partikelfilters bzw. des Messelementes ist neben der Bestimmung der Partikelkonzentration des Abgasstromes zugleich eine Funktionskontrolle des Partikelfilters realisierbar.

Erfolgt beispielsweise in Zeitabständen von mehreren Sekunden oder Minuten eine Oxidationsmitteldosierung, so ergibt sich bei intaktem Filter als Messsignal des Messelementes ein integraler Wert über die im Filter einlagerte Partikelmenge. Ist der Partikelfilter dagegen beeinträchtigt, beispielsweise gebrochen oder dergleichen, so entspricht das Messsignal des Messelementes im Wesentlichen der augenblicklich vorherrschenden Partikelkonzentration, die in diesem Fall unter dem zu erwartenden integrierten Signal liegt. Demzufolge kann die Vorrichtung gemäß der Erfindung zusätzlich als "on-bord-monitoring"-Vorrichtung bei der Verwendung von Partikelfiltern einer Verbrennungseinrichtung, insbesondere eines Fahrzeugs, ausgebildet werden.

Vor allem bei der Verwendung des im Abgasstrom der Verbrennungseinrichtung bereits vorhandenen Sauerstoff als Oxidationsmittel ist ein Erwärmen des Abgasstromes mittels der entsprechenden Heizeinheit auf über 500° C vorzusehen, so dass eine vorteilhafte Oxidation der Partikel, insbesondere des Rußes erfolgt.

Bei der Messung von Stickoxiden, insbesondere Stickstoffdioxid, als Oxidationsmittel ist eine Erwärmung des Abgasstromes mittels der entsprechenden Heizeinheit auf über 350° C zur vorteilhaften Oxidation der Partikel vorzusehen.

Insbesondere bei den Varianten der Erfindung, bei denen eine Erwärmung und/oder eine Abkühlung vorzusehen ist, ist in vorteilhafter Weise die Stromteilervorrichtung zu verwenden, wobei insbesondere der zu untersuchende Teilstrom des Abgases wesentlich kleiner als der gesamte Abgasstrom auszubilden ist. Beispielsweise umfasst der zu untersuchende Teilstrom lediglich ca. 1 Promille bis 10 Prozent des Gesamtstromes, wobei die gesamte Partikelmenge des Abgasstromes mittels der Steuer- bzw. Auswerteeinheit ermittelt wird.

In vorteilhafter Weise ist die Vorrichtung gemäß der Erfindung derart auszubilden, dass die Zeitauflösung zwischen einem Bruchteil einer Sekunde und mehreren Minuten realisierbar ist. Hierfür ist beispielsweise der Reaktionsbereich, die Strömungsgeschwindigkeit des Abgasstromes im Reaktionsbereich bzw. das Probenahmevolumen entsprechend auszubilden.

Gegebenenfalls kann Sekundärluft dem Reaktionsbereich vorteilhafterweise mit vorgegebener Menge zudosiert werden. Hierbei ist besonderes von Vorteil, dass das Oxidationsmittel vergleichsweise einfach und günstig zur Verfügung steht und darüber hinaus eine relativ konstante, bekannte Sauerstoffkonzentration aufweist. Bei dieser Variante der Erfindung ist gemäß den entsprechend oben aufgeführten Beispielen eine Erwärmung des Abgasstromes bzw. eines entsprechenden zu messenden Teilstromes auf ca. 500 bis 600° C vorzusehen.

Generell kann mittels entsprechender Elemente bzw. Maßnahmen eine vorteilhafte Vermischung des Oxidationsmittels mit dem Abgasstrom realisiert werden. Grundsätzlich ist für bestimmte Anwendungsfälle eine Ermittlung des Volumenstromes des Abgases von Vorteil.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: ein schematisches Blockschaltbild einer erfindungsgemäßen Vorrichtung,
- Figur 2: ein schematisches Blockschaltbild einer erfindungsgemäßen Vorrichtung mit einem Stromteiler,
- Figur 3: ein schematisches Blockschaltbild einer erfindungsgemäßen Vorrichtung mit einer Oxidationseinheit und
- Figur 4: ein schematisches Blockschaltbild einer erfindungsgemäßen Vorrichtung mit einem Partikelfilter.

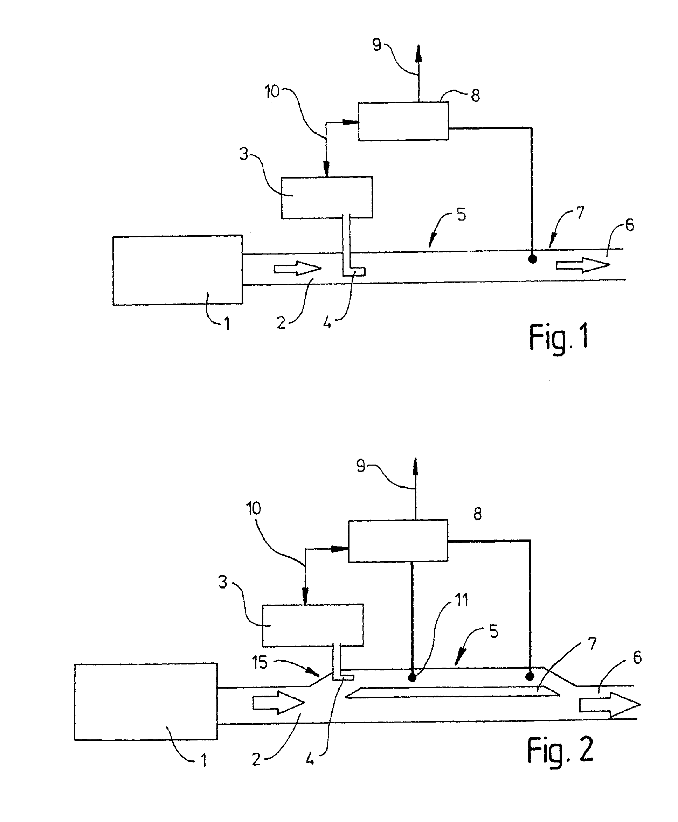

In Figur 1 ist ein Blockschaltbild einer erfindungsgemäßen Vorrichtung mit einer Verbrennungskraftmaschine 1 dargestellt. Die Verbrennungskraftmaschine 1 erzeugt Rohabgas 2 mit nicht näher dargestellter Partikel. Die Menge bzw. die Konzentration der Partikel des Rohabgases 2 wird unter Zuhilfenahme eines Oxidationsmittels indirekt ermittelt.

Eine Dosiervorrichtung 3 speichert und/oder erzeugt das Oxidationsmittel und dosiert dieses mittels einem Zufuhrelement 4 dem Rohabgas 2 zu. Zwischen dem Zufuhrelement und einem Sensor 7 zum Messen der Oxidationsmittelkonzentration ist ein Reaktionsbereich 5 ausgebildet. Im Reaktionsbereich 5 wird insbesondere der Ruß des Rohabgases 2 durch das Oxidationsmittel umgeformt, so dass ein Abgas 6 mit verminderter Oxidationsmittelkonzentration abströmt.

Der Sensor 7 erzeugt insbesondere ein Signal, das er einem Auswertemodul 8 zur Verfügung stellt. Das Auswertemodul 8 ist mittels einer Signalleitung 10 mit der Dosiervorrichtung 3 verbunden, so dass das Auswertemodul 8 über die Differenzbildung zwischen eingesetzter Menge und verbleibender Menge des Oxidationsmittels im Rohabgas 2 bzw. Abgas 6 ermittelt.

Vorzugsweise steuert und regelt das Auswertemodul 8 die Dosiervorrichtung 3 und somit die Menge des zudosierten Oxidationsmittels. Die ermittelte Partikelkonzentration wird mittels einer Signalleitung 9 gegebenenfalls einer nicht näher dargestellten Kontroll- bzw. Überwachungseinheit eines Fahrzeugs oder dergleichen zur Verfügung gestellt.

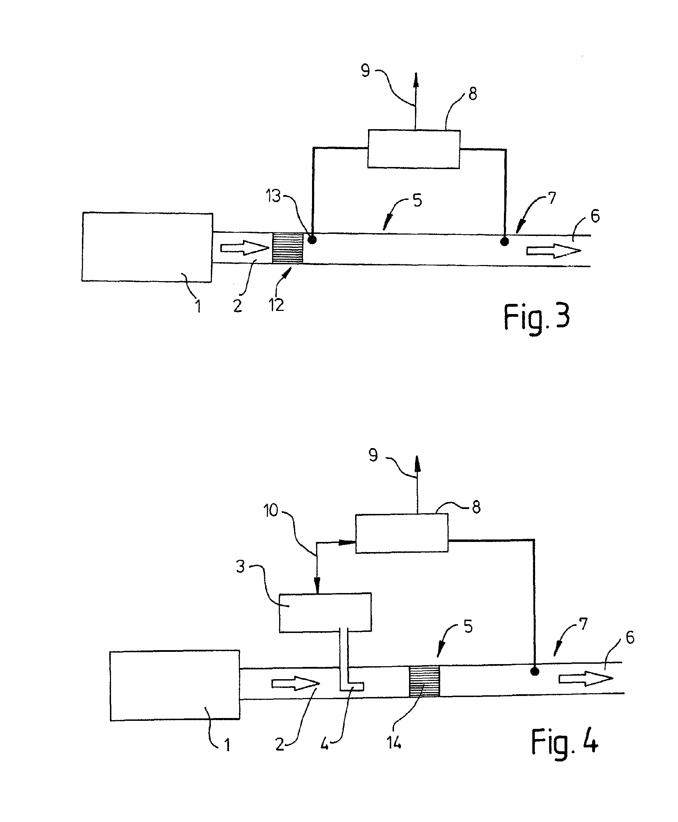

In Figur 2 ist eine Variante der Erfindung dargestellt, wobei das Rohabgas 2 mittels einem Stromteiler 15 in zwei getrennte Teilströme aufgeteilt wird. Hierbei wird beispielsweise der kleinere Teilstrom gemäß dem in Figur 1 dargestellten Beispiel untersucht bzw. dessen Partikelkonzentration bestimmt und mittels dem Auswertemodul 8 auf das gesamte Rohabgas 2 hochgerechnet.

Im Gegensatz zum Ausführungsbeispiel gemäß Figur 1 weist das Ausführungsbeispiel gemäß Figur 2 einen Temperatursensor 11 zur Bestimmung der Reaktionstemperatur des Reaktionsbereichs 5 auf. Unter anderem mit Hilfe des entsprechenden Temperatursensors 11 und des Auswertemoduls 8 kann sowohl die Dosiermenge des Oxidationsmittels in Abhängigkeit mit den Reaktionsbedingungen des Reaktionsbereichs 5 verändert werden als auch die Temperaturempfindlichkeit der Oxidationsmittelreaktion weitestgehend kompensiert werden.

In Figur 3 ist eine weitere Variante der Erfindung dargestellt, wobei im Gegensatz zu den zuvor beschriebenen Ausführungsbeispielen eine Oxidationseinrichtung 12, z.B. ein Oxidationskatalysator, zur Erzeugung eines Oxidationsmittels, beispielsweise Stickstoffdioxid, im Rohabgas 2 vorgesehen ist. Hierbei wird eine exakte Kenntnis der Oxidationsmittelkonzentration am in Strömungsrichtung des Rohabgases 2 vorderen Ende des Reaktionsbereichs 5 mit einem zweiten Sensor 13 realisiert. Demzufolge wird der Reaktionsbereich 5 zwischen dem Sensor 13 und dem Sensor 17 ausgebildet, wobei das Auswertemodul 8 die Differenz der beiden Signale zur Bestimmung der Partikelkonzentration des Rohabgases 2 verwendet.

In Figur 4 ist eine vierte Variante der Erfindung dargestellt, wobei insbesondere ein Partikelfilter 14 im Reaktionsbereich 5 angeordnet ist. Mit Hilfe dieser Anordnung ist eine Funktionskontrolle des Partikelfilters 4 mittels der Vorrichtung gemäß der Erfindung realisierbar.

Der Partikelfilter 14 summiert bzw. integriert die Partikel im Laufe der Zeit auf, so dass sich bei intaktem Partikelfilter 14 als Messsignal des Sensors 7 ein integraler Wert über die im Partikelfilter 14 eingelagerte Partikelmenge ergibt. Ist der Partikelfilter 14 jedoch beschädigt bzw. gebrochen, so entspricht das Messsignal des Sensors 7 im Wesentlichen der augenblicklich vorherrschenden Partikelkonzentration, die unter dem erwarteten integrierten Signal liegt.

Die in den Figuren dargestellten Ausführungsbeispiele können gemäß der Erfindung in verschiedenster Weise miteinander kombiniert werden. Beispielsweise kann ein Stromteiler 15 und/oder ein Temperatursensor 11 auch in vorteilhafter Weise für die Varianten gemäß den jeweils anderen Figuren vorgesehen werden.

Darüber hinaus kann bei den in den Figuren dargestellten Ausführungsbeispielen zusätzlich eine Thermostatisierung, beispielsweise mittels einer Kühl- und/oder Heizvorrichtung realisiert werden. Eine entsprechende Thermostatisierung des Rohabgases 2 ermöglicht insbesondere eine Reduzierung von Messungenauigkeiten, die beispielsweise aufgrund von Temperaturschwankungen des Rohabgases 2 und somit veränderter Reaktionsbedingungen im Reaktionsbereich 5 hervorgerufen werden.

### Bezugszeichenliste:

- 1: Verbrennungskraftmaschine
- 2: Rohabgas
- 3: Dosiervorrichtung
- 4: Zufuhrelement
- 5: Reaktionsbereich
- 6: Abgas
- 7: Sensor
- 8: Auswertemodul
- 9: Signalleitung
- 10: Signalleitung
- 11: Temperatursensor
- 12: Oxidationseinrichtung
- 13: Sensor
- 14: Partikelfilter
- 15: Stromteiler

## Patentansprüche

1. Vorrichtung zur Bestimmung einer Partikelkonzentration eines Abgasstroms (2) einer Verbrennungseinrichtung (1), insbesondere einer Diesel-Verbrennungseinrichtung, **dadurch gekennzeichnet, dass** wenigstens eine Messeinheit zum Messen einer Konzentration eines Oxidationsmittels im Abgasstrom (2) mit wenigstens einem Oxidationsmittel sensitiven Messelement (7, 13) vorgesehen ist.

2. Vorrichtung nach Anspruch 1, **dadurch gekennzeichnet, dass** wenigstens eine Speichereinheit (3) zur Speicherung des Oxidationsmittels vorgesehen ist.

3. Vorrichtung nach einem der vorgenannten Ansprüche, **dadurch gekennzeichnet, dass** wenigstens eine Oxidationseinheit (3) zur Erzeugung des Oxidationsmittels vorgesehen ist.

4. Vorrichtung nach einem der vorgenannten Ansprüche, **dadurch gekennzeichnet, dass** die Oxidationseinheit (3) wenigstens ein Oxidationselement (12) zur Umformung des Abgasstromes und Erzeugung des Oxidationsmittels umfasst.

5. Vorrichtung nach einem der vorgenannten Ansprüche, **dadurch gekennzeichnet, dass** wenigstens ein von dem Messelement (7, 13) beabstandetes Zufuhrelement (4) zur Zuführung des Oxidationsmittels von der Speichereinheit (3) und/oder Oxidationseinheit (3) zum Abgasstrom (2) vorgesehen ist.

6. Vorrichtung nach einem der vorgenannten Ansprüche, **dadurch gekennzeichnet, dass** die Messeinheit wenigstens zwei Oxidationsmittel sensitive, voneinander beabstandete Messelemente (7, 13) umfasst.

7. Vorrichtung nach einem der vorgenannten Ansprüche, **dadurch gekennzeichnet, dass** wenigstens eine Dosiervorrichtung (4) zum dosierten Zuführen des Oxidationsmittels zum Abgasstrom (2) vorgesehen ist.

8. Vorrichtung nach einem der vorgenannten Ansprüche, **dadurch gekennzeichnet, dass** wenigstens eine Stromteilereinheit (15) zum Teilen des Abgasstromes (2) in mindestens zwei Teilströme vorgesehen ist.

9. Vorrichtung nach einem der vorgenannten Ansprüche, **dadurch gekennzeichnet, dass** die Stromteilervorrichtung (15) wenigstens das bzw. die Messelemente (7, 13), Zufuhrelement (4), Oxidationselement (12) und/oder die Dosiervorrichtung (4) umfasst.

10. Vorrichtung nach einem der vorgenannten Ansprüche, **dadurch gekennzeichnet, dass** wenigstens eine Kühl- und/oder Heizeinheit zum Kühlen bzw. Heizen des Abgasstromes (2) und/oder dessen Teilströme vorgesehen ist.

11. Vorrichtung nach einem der vorgenannten Ansprüche, **dadurch gekennzeichnet, dass** wenigstens ein Partikelfilter (14) zur Filtrierung der Partikel des Abgasstromes (2) vorgesehen ist.

12. Vorrichtung nach einem der vorgenannten Ansprüche, **dadurch gekennzeichnet, dass** wenigstens der Partikelfilter (14) in Strömungsrichtung des Abgases (2, 6) vor einem Messelement (7) angeordnet ist.

13. Fahrzeug mit einer Vorrichtung zur Bestimmung einer Partikelkonzentration eines Abgasstroms (2) einer Verbrennungseinrichtung (1), insbesondere einer Diesel-Brennkraftmaschine, **dadurch gekennzeichnet, dass** die Vorrichtung nach einem der vorgenannten Ansprüche ausgebildet ist.

14. Verfahren zur Bestimmung einer Partikelkonzentration eines Abgasstroms (2) einer Verbrennungseinrichtung (1), insbesondere einer Diesel-Brennkraftmaschine, **dadurch gekennzeichnet, dass** eine Vorrichtung nach einem der vorgenannten Ansprüche verwendet wird.
